# EUROPÄISCHE PATENTSCHRIFT

(11) **EP 0 706 967 B1**
(45) Veröffentlichungstag und Bekanntmachung des Hinweises auf die Patenterteilung: **10.03.1999**
(21) Anmeldenummer: 95113351.1
(22) Anmeldetag: 25.08.1995
(51) Int. Cl.: B65H 31/30, B65G 47/90

(54) **Verfahren und Vorrichtung zum Manipulieren von gestapelten, flächigen Gegenständen**
Method and appparatus for manipulating stacked flat articles
Procédé et dispositif pour manipuler des articles plats empilés

(30) Priorität: 10.10.1994 CH 3041/94
(43) Veröffentlichungstag der Anmeldung: 17.04.1996
(73) Patentinhaber: Ferag AG, 8340 Hinwil (CH)
(72) Erfinder: Staub, Samuel, CH-8635 Oberdürnten (CH)
(74) Vertreter: Frei, Alexandra Sarah

(56) Entgegenhaltungen:
- EP-A- 0 327 858
- EP-A- 0 377 399
- EP-A- 0 421 148

## Beschreibung

Die Erfindung betrifft ein Verfahren nach dem Oberbegriff des ersten unabhängigen Patentanspruchs zum Manipulieren von gestapelten, flächigen Gegenständen sowie eine Vorrichtung zur Durchführung des Verfahrens nach dem Oberbegriff des entsprechenden unabhängigen Patentanspruchs.

Eine gattungsgemäße Manipulations einrichtung ist aus dem Dokument EP-A-0 421 148 bekannt.

Um eine Mehrzahl von gleichen oder mindestens ähnlichen, flächigen Gegenständen zu ordnen bietet sich naheliegenderweise die Form des Stapels an, in dem die flächigen Gegenstände mit aneinanderliegenden Hauptflächen und meist parallel zueinander liegenden Kanten angeordnet sind. Ein solcher Stapel, wenn er aus Druckprodukten besteht, auch Stange genannt, bildet einen Körper mit zwei Stirnflächen (Hauptflächen der äussersten beiden Gegenstände) und, für viereckige Gegenstände, vier Kantenflächen (gebildet aus Kanten der Gegenstände). Die Stabilität derartiger Stapel und damit auch ihre Manipulierbarkeit sind sehr beschränkt. Sie sind ohne Hilfsmittel nur stabil und manipulierbar, solange sie auf einer horizontalen Auflage aufliegen und die Hauptflächen der Gegenstände im wesentlichen ebenfalls horizontal ausgerichtet sind, und solange die Stapelhöhe (Distanz zwischen den Stirnflächen des Stapels, bestimmt durch Anzahl und Dicke der gestapelten Gegenstände) einen von verschiedenen Eigenschaften der Gegenstände bestimmten Maximalwert nicht überschreitet.

Stapel mit einer die Maximalhöhe überschreitenden Stapelhöhe und/oder mit Hauptflächen der Gegenstände, die nicht waagrecht ausgerichtet sind, sind nur mit entsprechenden Hilfsmittein (Stabilisierungs- oder Führungsmittel) stabil. Derartige Stabilisierungsmittel sind für stationäre oder ohne wesentliche Veränderung ihrer Lage zu bewegende Stapel einfache Führungen, durch die der Stapel je nach seiner Lage zwei oder mehrseitig gestützt und gehalten wird. Derartige Führungen sind auch derart gestaltbar, dass die gestapelten Gegenstände von irgend einer Seite zugänglich und beispielsweise vom Stapel einzeln entfernbar sind. An Stabilisierungsmittel, mit deren Hilfe Stapel manipuliert, das heisst im wesentlichen im Bereiche eines Stabilisierungsmittels erfasst, in verschiedenste Lagen gebracht und im Bereiche eines weiteren Stabilisierungsmittels deponiert werden können, müssen höhere Anforderungen gestellt werden.

Hilfsmittel, mit deren Hilfe Stapel sowohl stationär stabilisierbar als auch beweg- und manipulierbar sind, sind beispielsweise Umbindungen oder Behälter, die für die Manipulation mit dem Stapel von einem geeigneten Manipulierwerkzeug ergriffen, in verschiedene Lagen gebracht und deponiert werden. Es kommen auch zusammenpressbare Platten- oder Backenpaare zur Anwendung, die an den Stirnflächen von Stapeln angreifen. Derartige Plattenpaare können auch Bestandteile entsprechender Manipulierwerkzeuge sein.

Es zeigt sich, dass die oben genannten Hilfsmittel, die Stapel von flächigen Gegenständen stabil und manipulierbar machen, alle ihre Nachteile haben. Gebundene Stapel sind zwar äusserst stabil und können eigentlich beliebig und in allen Lagen manipuliert werden. Ferner sind Umbindungen an beliebige Formate von Gegenständen in einfachster Weise anpassbar, wobei allerdings auch für umbundene Stapel der Stapelhöhe Grenzen gesetzt sind. Das Anbringen und Entfernen der Umbindungen ist aber, insbesondere wenn nur kurze Manipulierschritte durchzuführen sind, sehr aufwendig. Behälter, die gestapelte, flächige Gegenstände enthalten, können nur in alle Lagen gebracht werden, wenn sie geschlossen sind und wenn sie in ihrer Grösse genau an den Stapel angepasst, das heisst auch voll sind. Für nur teilweise gefüllte Behälter sind die Lagen, in die sie bringbar sind, ohne dass die Ordnung des Stapels mindestens teilweise verloren geht, schon sehr beschränkt. Dies gilt insbesondere auch für offene Behälter, die verwendet werden, wenn die Gegenstände zusätzlich zugänglich sein sollten. Stapel, die durch Stirnplatten zusammengehalten werden, können ohne weitere Hilfsmittel in alle Lagen gebracht werden. Das Positionieren und Entfernen der Stirnplatten stellt aber an die beim Erfassen und Deponieren mitbeteiligten Stabilisierungsmittel die Bedingung, dass die Stirnflächen des Stapels frei zugänglich sein müssen. Ferner zeigt es sich, dass die mögliche Stapelhöhe eines zwischen Stirnplatten eingeklemmten Stapels eher klein ist, dies insbesondere für Gegenstände, deren Hauptflächen nicht genau parallel und/oder mit wenig Reibung gegeneinander bewegbar sind.

Die Erfindung stellt sich nun die Aufgabe, ein Verfahren aufzuzeigen, mit dem eine Mehrzahl von flächigen Gegenständen, die durch Stabilisierungsmittel in einer gestapelten Ordnung gehalten werden, ergriffen, in verschiedenste Lagen gebracht und im Bereiche von weiteren Stabilisierungsmitteln deponiert werden kann, ohne dass die gestapelte Ordnung der Gegenstände verändert wird. Das Verfahren soll gegenüber bekannten Verfahren, die die obige Aufgabe ebenfalls lösen, dahingehend verbessert sein, dass einerseits an die Stabilisierungsmittel auf der Ergreif-Seite und auf der Deponier-Seite möglichst wenig Bedingungen gestellt werden müssen und dass andererseits die Stapelhöhe in weitesten Grenzen variierbar ist und auch sehr verschiedene Gegenstände, insbesondere wenig steife und/oder sehr dünne Gegenstände sowie Gegenstände mit unregelmässiger Dicke und/oder mit für eine Stapelung sehr ungeeigneten Oberflächen in gestapelter Form manipulierbar sind, ohne dass das Verfahren angepasst werden müsste. Ferner ist es die Aufgabe der Erfindung, eine Vorrichtung zur Durchführung des erfindungsgemässen Verfahrens zu schaffen, die wenig aufwendig und einfach an verschiedene Formate von flächigen Gegenständen anpassbar ist.

Diese Aufgabe wird gelöst durch das Verfahren und die Vorrichtung, wie sie in den Patentansprüchen definiert sind.

Das erfindungsgemässe Verfahren besteht im wesentlichen darin, einen Stapel von flächigen Gegenständen zwischen zwei Klemmbacken festzuhalten, welche Klemmbacken an zwei einander gegenüberliegenden Kantenflächen des Stapels oder insbesondere an zwei einander gegenüberliegenden, über die ganze Stapelhöhe verlaufenden Teilbereichen solcher Kantenflächen angreifen. Die Klemmflächen der Klemmbacken sind dazu beispielsweise durch eine entsprechende Beschichtung elastisch deformierbar ausgestaltet, derart, dass die Kanten der gestapelten Gegenstände sich leicht darin eindrücken. Diese Klemmflächen überragen die Stirnflächen des Stapels derart, dass insbesondere die äussersten der gestapelten Gegenstände durch die Deformation der Klemmfläche in ihrer Stapelposition gehalten werden.

Für das Ergreifen eines Stapels mit den Klemmbacken muss der Stapel von Stabilisierungsmitteln stabil gehalten werden derart, dass mindestens die beiden durch die Klemmbacken zu erfassenden Kantenflächen oder Teilbereiche davon frei zugänglich sind. Auch von den Stabilisierungsmitteln, denen der Stapel übergeben wird, ist dieselbe Bedingung zu erfüllen.

Es zeigt sich, dass Stapel oder Stangen flächiger Gegenstände, die zwischen Klemmbacken mit elastisch deformierbaren Klemmflächen an zwei einander gegenüberliegenden Kantenflächen oder Teilbereichen von Kantenflächen gehalten sind, sehr gut manipulierbar, das heisst in die verschiedensten Lagen bringbar sind. Es zeigt sich ebenfalls, dass das erfindungsgemässe Verfahren für die verschiedensten flächigen Gegenstände unverändert anwendbar ist. Insbesondere zeigt es sich, dass auch Gegenstände mit schiecht aneinander haftenden Hauptflächen, Gegenstände mit nicht exakt parallelen Hauptflächen und Gegenstände mit wenig steilen Kantenbereichen, die in eigentlich beliebig grossen Zahlen zu Stapeln geordnet sind, ohne Probleme zwischen den an den Kantenflächen angreifenden Klemmbacken manipulierbar sind, wobei an die Genauigkeit der Stapelung eher niedrige Ansprüche gestellt werden müssen.

Da es die oben genannten Vorteile aufweist, eignet sich das erfindungsgemässe Verfahren insbesondere für die Manipulation von verschiedensten, flächigen Gegenständen, wie sie zu Werbezwecken in Zeitungen und Zeitschriften eingebracht werden. Dies sind beispielsweise wenig steile, kleinere und grössere Karten, hochglänzende Musterbeutel mit festem oder flüssigem Inhalt oder flexible Beutel, in denen flächige Gegenstände, die kleiner sind als der Beutel, verpackt sind, wobei es wegen der häufigen Wechsel sehr wichtig ist, dass alle diese Gegenstände mit demselben Verfahren und derselben Vorrichtung manipulierbar sind.

Die erfindungsgemässe Vorrichtung weist im wesentlichen ein Paar von Klemmbacken mit elastisch deformierbaren Klemmflächen auf, die durch einen vorteilhalterweise für verschiedene Formate von Gegenständen anwendbaren oder einfach an verschiedene Formate von Gegenständen anpassbaren Klemmechanismus gegeneinander pressbar sind.

Das erfindungsgemässe Verfahren und beispielhalte Ausführungsformen der erfindungsgemässen Vorrichtung sollen anhand der folgenden Figuren im Detail beschrieben werden. Dabei zeigen:
- **Figur 1**: das erfindungsgemässe Verfahren in einer schematischen dreidimensionalen Darstellung;
- **Figur 2**: eine beispielhalte Ausführungsform der erfindungsgemässen Vorrichtung ebenfalls als dreidimensionale Darstellung, wobei auch Stabilisierungsmittel, von denen der Stapel übernommen wird und an die der Stapel abgegeben wird, dargestellt sind;
- **Figur 3**: einen Ausschnitt der Ausführungsform gemäss Figur 2, parallel zu den Stirnseiten eines zu manipulierenden Stapels geschnitten.

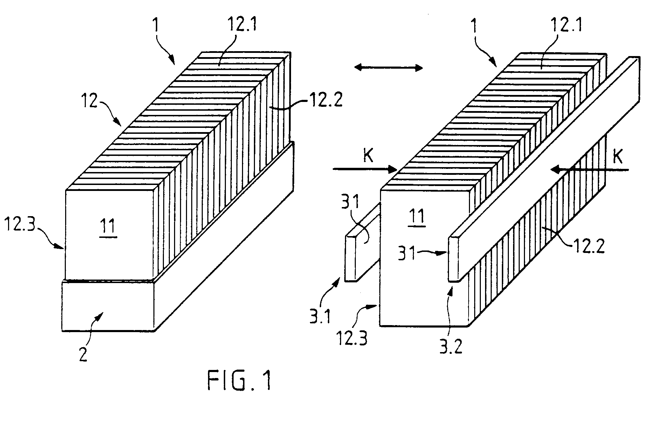

**Figur 1** zeigt links den Ergreif- bzw. Deponierzustand eines Stapels 1 mit Stirnflächen 11 und Kantenflächen 12, der durch Stabilisierungsmittel 2, beispielsweise durch einen offenen Behälter (Schachtel), in diesem Zustand gehalten wird. Die Stabilisierungsmittel 2 lassen die obere Kantenfläche 12.1 und die oberen Bereiche der seitlichen Kantenflächen 12.2 und 12.3 frei zugänglich. Der Ergreif- bzw. Deponierzustand ist in der Figur mit senkrechten Stirnflächen des Stapels 1 dargestellt. Selbstverständlich sind auch andere Lagen des Stapels möglich, solange die Gegenstände durch entsprechende Stabilisierungsmittel in dieser Lage in gestapelter Ordnung haltbar sind, insbesondere können natürlich die Stapellagen des Ergreif- und des Deponierzustands verschieden sein.

Rechts ist derselbe Stapel 1 im Manipulierzustand dargestellt, also von zwei Klemmbacken 3.1 und 3.2 gehalten, wobei die Klemmbacken auf zwei einander gegenüberliegende Teilbereiche der seitlichen Kantenflächen 12.2 und 12.3 des Stapels wirken. Die Klemmflächen 31 der Klemmbacken 3.1 und 3.2 sind dabei elastisch deformierbar, sodass die Kanten der gestapelten Gegenstände, wenn auf die Klemmbacken ein Klemmdruck K wirkt, leicht in diese Oberfläche eingepresst werden. Auch im Manipulierzustand ist der Stapel 1 in der Figur mit senkrechten Stirnflächen 11 dargestellt. Insbesondere im Manipulierzustand sind aber selbstverständlich alle Stapellagen möglich.

Die in der Figur 1 dargestellten Klemmbacken 3.1 und 3.2 sind auf Teilbereichen von Kantenflächen des zu manipulierenden Stapels positioniert. Die Lage solcher Teilbereiche sind auf den einander gegenüberliegenden Kantenflächen frei wählbar. Selbstverständlich ist es auch möglich Klemmbacken zu verwenden, die zwei ganze einander gegenüberliegende Kantenflächen des Stapels abdecken, wobei dann im Ergreif- bzw. Deponierzustand der Stapel nur über eine Kantenfläche und die beiden Stirnflächen zu stabilisieren ist.

Das erfindungsgemässe Verfahren besteht nun darin, an einen zu manipulierenden Stapel, der durch erste Stabilisierungsmittel derart gehalten wird, dass mindestens zwei über die ganze Stapelhöhe verlaufende, einander gegenüberliegende Teilbereiche von zwei einander gegenüberliegenden Kantenflächen frei zugänglich sind (Ergreifzustand des Stapels), an diesen Teilbereichen je einen Klemmbacken mit elastisch deformierbarer Klemmfläche derart zu positionieren, dass die Klemmbacken über die Stirnseiten des Stapels vorstehen, die Klemmbacken zusammenzupressen und den Stapel zwischen den Klemmbacken aus den ersten Stabilisierungsmitteln zu entfernen (Manipulierzustand des Stapels), zu zweiten Stabilisierungsmitteln zu transportieren und dort zu deponieren.

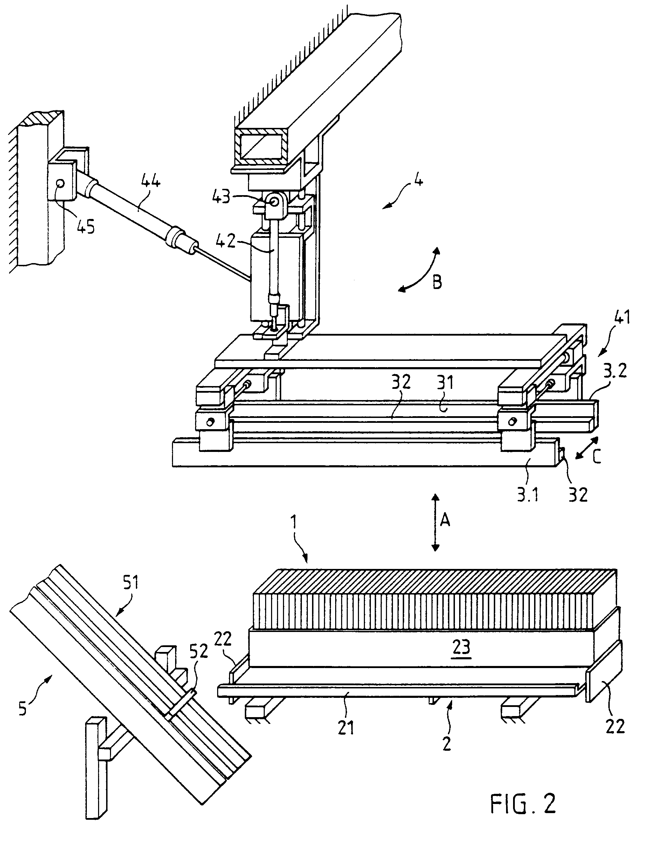

**Figur 2** zeigt mehr im Detail eine beispielhafte Ausführung der Vorrichtung zur Durchführung des erfindungsgemässen Verfahrens. Die Figur zeigt den Stapel 1 im Ergreifzustand mit ersten Stabilisierungsmitteln 2, die Vorrichtung 4 zur Durchführung des erfindungsgemässen Verfahrens mit den Klemmbacken 3.1 und 3.2 und die zweiten Stabilisierungsmittel 5. Die Doppelpfeile A, B und C zeigen schematisch die Bewegungen, die die Klemmbacken ausführen, um den Stapel 1 im Bereiche der ersten Stabilisierungsmittel 2 zu ergreifen, in den Bereich der zweiten Stabilisierungsmittel zu transportieren und dort zu deponieren. Dies sind einerseits Bewegungen des Klemmbackenpaares (Pfeile A und B) und die Klemmbewegungen der Klemmbacken relativ zueinander (Pfeil C).

Die erfindungsgemässe Vorrichtung 4 weist also die zwei Klemmbacken 3.1 und 3.2 auf, deren gegeneinander gewandte Oberflächen (Klemmflächen 31) mit einem, sich in Richtung der Stapelhöhe eines zu manipulierenden Stapels durchgehend erstreckenden, elastisch deformierbaren Materialstreifen 32 belegt sind. Die Figur zeigt einen Streifen 32, der senkrecht zur Stapelhöhe nicht die ganzen Klemmflächen 31 belegt, was nicht zwingend ist. Der Streifen kann auch gleich breit oder breiter sein als die Klemmflächen 31. Anstelle von aufgelegten Streifen 32 aus einem elastisch deformierbaren Material kann auch eine entsprechende Beschichtung der Klemmflächen 31 zur Anwendung kommen oder ein Klemmbackenmaterial, das an sich steil ist, aber eine elastisch genügend deformierbare Oberfläche aufweist.

Als Material für den Streifen 32 kann beispielsweise ein geschiossenporiger Polyurethauschaum verwendet werden. Auch ein mit Luft gefüllter Schlauch ist denkbar.

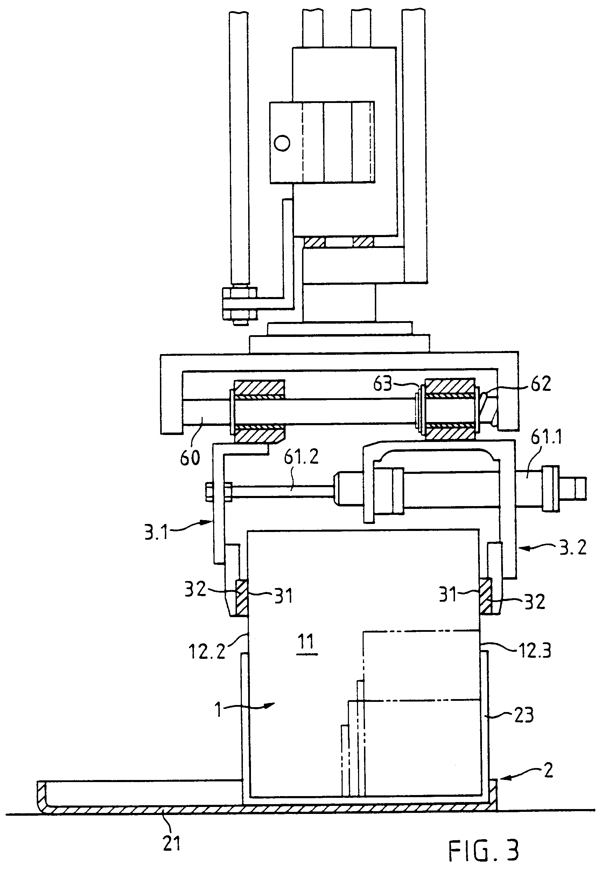

Die Klemmbacken 3.1 und 3.2 sind mittels eines Klemmechanismus 41 gegeneinander pressbar. Eine beispielharte Ausführungsform eines derartigen Klemmechanismus, der für verschiedene Formate von zu manipulierenden Gegenständen verwendbar ist, soll im Zusammenhang mit der Figur 3 beschrieben werden. Ferner weist die Vorrichtung 4 ein Mittel zur Durchführung der Auf-Ab-Bewegung (Pfeil A) auf, beispielsweise in Form eines hydraulisch betätigten Zylinders 42. Die ganze Vorrichtung 4 ist um eine ortsfeste Schwenkachse 43 schwenkbar angeordnet und weist auch Mittel zur Durchführung einer Schwenkbewegung (Pfeil B) um die Schwenkachse 43 auf, beispielsweise einen weiteren hydraulischen Zylinder 44, der um eine weitere ortsfeste Schwenkachse 45 schwenkbar angeordnet und schwenkbar mit der Vorrichtung verbunden ist.

Die Mittel zur Bewegung der Vorrichtung 4 sind für die Erfindung nicht relevant. Sie müssen selbstverständlich für jede Anwendung des erfindungsgemässen Verfahrens und der erfindungsgemässen Vorrichtung an die ersten und zweiten Stabilisierungsmitteln und an deren gegenseitige Lage angepasst speziell konzipiert werden.

Die in der Figur 2 dargestellten ersten Stabilisierungsmittel 2 zur Stabilisierung des Ergreifzustandes bestehen aus einem auf einer Unterlage 21 beispielsweise durch Klemmittel 22 festgehaltenen, gegen oben offenen Behälter 23, beispielsweise einer Schachtel.

Die in der Figur 2 dargestellten zweiten Stabilisierungsmittel 5 bestehen aus einem geneigten, gegen oben offenen Kanal 51 in dem eine Stirnplatte 52, vorteilhafterweise verstellbar oder beweglich angeordnet ist. Der Stapel wird mit Hilfe der Klemmbacken vorteilhafterweise leicht oberhalb der Stirnplatte 52 abgesetzt und lehnt sich dann durch die Schwerkraft an diese an. Von einem Stapel, der im Kanal 51, stirnseitig an die Stirnplatte 52 anlehnend, angordnet ist, kann beispielsweise mit einer entsprechenden Vereinzelungsvorrichtung in getakteter Folge immer der oberste Gegenstand des Stapels entfernt werden, wenn die Stirnplatte 52 im Kanal 51 entsprechend nach oben verschoben wird. Für einen kontinuierlichen Betrieb sind mindestens zwei Stirnplatten vorzusehen, sodass ein zweiter Stapel unterhalb eines ersten Stapels deponiert werden kann, bevor der erste Stapel aufgebraucht ist.

**Figur 3** zeigt einen beispielhaften Mechanismus für die Klemmbewegung der Klemmbacken 3.1 und 3.2, der für verschiedene Formate von handzuhabenden Gegenständen anwendbar ist. Die beiden Klemmbacken 3.1 und 3.2 sind in der Papierebene gegeneinander verschiebbar angeordnet. Dazu sind sie über einen Zylinder 61.1, in dem ein doppelt wirkender Kolben (nicht dargestellt) mit einer Kolbenstange 61.2 bewegbar angeordnet ist, miteinander verbunden und auf einer Achse 60 zwischen zwei Endanschlägen begrenzt gefuhrt. Zusätzlich wird die Anordnung der Klemmbacken und des Zylinders auf der Achse 60 durch eine Feder 62 gegen einen fest auf der Achse 60 sitzenden Referenzanschlag 63 gedrückt.

In offener Stellung der Klemmbacken 3.1 und 3.2 werden diese durch die Kolben/Zylinderanordnung (61.1/61.2) derart auseinander gehalten, dass sie gegen die Kraft der Feder 62 je in ihrer auf der Achse 60 äussersten Position stehen. Für das Ergreifen eines Stapels wird durch entsprechende Druckbeaufschlagung des Kolbens der Abstand zwischen den Klemmbacken verkleinert, bis die Klemmflächen auf die Kantenflächen 12.2 und 12.3 des zu handhabenden Stapels 1 pressen. Gleichzeitig wird die Anordnung von Klemmbacken und Zylinder durch die Feder 62 gegen den Anschlag 63 gedrückt. Dadurch ist für jedes Format die Klemmstellung der einen Klemmbacke 3.2 (Referenzbacke) konstant und kann für weitere Vorrichtungen und Vorrichtungsteile wie beispielsweise die ersten Stabilisierungsmittel 2 als Referenz verwendet werden.

Die maximale Breite von zu handhabenden Gegenständen entspricht dem Abstand der Klemmbacken 3.1 und 3.2, wenn die Referenzbacke 3.2 am Anschlag 63 ansteht und die andere Klemmbacke 3.1 in ihrer auf der Achse 60 äussersten Position steht, wobei die Deformation der Klemmflächen und gegebenenfalls der Gegenstände mitberücksichtigt werden muss. Alle kleineren Formate (ausgezogen und gestrichelt dargestellt) sind mit der Vorrichtung ebenfalls handhabbar.

Für die Manipulation der weiter oben genannten Werbegegenstände zu deren Einführung in Zeitschriften und Zeitungen eignet sich eine Vorrichtung, mit der ein Klemmdruck im Bereiche von ca. 1-3·10⁴ Pa (0,1 bis 0,3 kp/cm²) erriechbar ist.

## Patentansprüche

1. Verfahren zum Manipulieren einer Vielzahl von flächigen Gegenständen, die zu einem Stapel (1) mit einer Stapelhöhe bis weit über die Maximalhöhe eines freien Stapels derselben Gegenstände geordnet sind, wobei der Stapel (1) von ersten Stabilisierungsmitteln (2) übernommen und an zweite Stabilisierungsmittel (5) übergeben wird, **dadurch gekennzeichnet,** dass die ersten Stabilisierungsmittel (2) derart ausgebildet sind, dass mindestens zwei, über die ganze Stapelhöhe verlaufende, einander gegenüberliegende Teilbereiche von zwei einander gegenüberliegenden Kantenflächen (12.2, 12.3) des Stapels (1) frei zugänglich sind, dass der Stapel zwischen zwei in einer Klemmrichtung (C) geführt relativ zueinander bewegbaren Klemmbacken (3.1, 3.2) mit elastisch deformierbaren Klemmflächen (31) ergriffen wird, wobei die Klemmbacken (3.1, 3.2) in den genannten Teilbereichen von Kantenflächen und über die Stirnflächen (11) des Stapels vorstehend positioniert und zusammengepresst werden und dass der Stapel (1) zwischen den Klemmbacken (3.1, 3.2) zu den zweiten Stabilisierungsmitteln (5) transportiert und dort deponiert wird.

2. Verfahren nach Anspruch 1, **dadurch gekennzeichnet**, dass die zu einem Stapel (1) geordneten Gegenstände Karten, hochglänzende Musterbeutel mit flüssigem oder festem Inhalt, Musterbeutel aus Papier oder Kunststoffolie mit beliebigem Inhalt oder Warenmuster sind und dass die ersten Stabilisierungsmittel (2) einen offenen Behälter (23) aufweisen, aus dem die Gegenstände vorstehen.

3. Verfahren nach Anspruch 2, **dadurch gekennzeichnet,** dass durch die Klemmbacken (3.1, 3.2) ein Klemmdruck im Bereiche von 1 bis 3·10⁴ Pa (0,1 bis 0,3 kp/cm2) erzeugt wird.

4. Vorrichtung zur Durchführung des Verfahrens nach einem der Ansprüche 1 bis 3, welche Vorrichtung zwei Klemmbacken (3.1, 3.2) und Mittel zum Zusammenpressen der Klemmbacken aufweist, **dadurch gekennzeichnet,** dass die Länge der Klemmbacken (3.1, 3.2) grösser ist als die Stapelhöhe eines zu manipulierenden Stapels (1), dass die Klemmflächen (31) der Klemmbacken elastisch deformierbar ausgebildet sind und dass die Vorrichtung Führungsmittel zur Führung der Bewegung der Klemmbacken in Klemmrichtung (C) aufweist.

5. Vorrichtung nach Anspruch 4, **dadurch gekennzeichnet,** dass auf den Klemmflächen (31) der Klemmbacken (3.1, 3.2) über die Stapelhöhe eines zu manipulierenden Stapels durchgehende Streifen (32) aus einem elastisch deformierbaren Material aufgebracht sind.

6. Vorrichtung nach Anspruch 5, **dadurch gekennzeichnet,** dass die Streifen (32) aus geschlossenporigem Polyurethanschaum bestehen.

7. Vorrichtung nach Anspruch 5, **dadurch gekennzeichnet,** dass die Streifen aus je einem mit Luft füllbaren Schlauch bestehen.

8. Vorrichtung nach einem der Ansprüche 4 bis 7, **dadurch gekennzeichnet,** dass die Klemmbacken (3.1, 3.2) durch eine Kolben/Zylinder-Anordnung (61.1/61.2) miteinander verbunden und auf einer Achse (60) zwischen zwei Endanschlägen gegeneinander bewegbar geführt sind.

9. Vorrichtung nach Anspruch 8, **dadurch gekennzeichnet,** dass auf der Achse (60) ein Referenzanschlag (63) vorgesehen ist, gegen den die durch die Kolben/Zylinder-Anordnung (61.1/61.2) miteinander verbundenen Klemmbacken (3.1 und 3.2) durch die Kraft einer Feder (62) gepresst werden.

10. Vorrichtung nach einem der Ansprüche 4 bis 9, **dadurch gekennzeichnet,** dass die ersten Stabilisierungsmittel (2) ein auf einer Unterlage (21) festgehaltener, offener Behälter (23) aufweisen, wobei die gestapelten Gegenstände aus dem Behälter vorstehen.

11. Vorrichtung nach einem der Ansprüche 4 bis 10, **dadurch gekennzeichnet,** dass die zweiten Stabilisierungsmittel (5) ein gegen oben offener, schief angeordneter Kanal (51) und mindestens eine in diesem Kanal verschiebbare Stirnplatte (52) aufweisen.

12. Vorrichtung nach einem der Ansprüche 4 bis 11, **dadurch gekennzeichnet,** dass die Klemmbacken (3.1 und 3.2) miteinander um eine Schwenkachse (43) verschwenkbar angeordnet sind.

## Claims

1. Method of manipulating a multiplicity of sheet-like articles which are formed into a stack (1) with a stack height which far exceeds the maximum height of a free-standing stack of the same articles, the stack (1) being received by first stabilizing means (2) and transferred to second stabilizing means (5), characterized in that the first stabilizing means (2) are designed such that at least two mutually opposite sub-regions of two mutually opposite edge surfaces (12.2, 12.3) of the stack (1), said sub-regions running over the entire stack height, are freely accessible, in that the stack is gripped between two clamping jaws (3.1, 3.2) which can be moved relative to one another in a guided manner in a clamping direction (C) and have elastically deformable clamping surfaces (31), it being the case that the clamping jaws (3.1, 3.2) are positioned in said sub-regions of edge surfaces, such that they project beyond the end surfaces (11) of the stack, and pressed together, and in that the stack (1) is transported to the second stabilizing means (5), between the clamping jaws (3.1, 3.2), and deposited there.

2. Method according to Claim 1, characterized in that the articles formed into a stack (1) are cards, glossy sample packs with liquid or solid contents, sample packs made of paper or plastic film with any desired contents or trade samples, and in that the first stabilizing means (2) have an open container (23) from which the articles project.

3. Method according to Claim 2, characterized in that the clamping jaws (3.1, 3.2) produce a clamping pressure in the region of from 1 to 3·10⁴ Pa (0.1 to 0.3 kp/cm²).

4. Apparatus for implementing the method according to one of Claims 1 to 3, which apparatus has two clamping jaws (3.1, 3.2) and means for pressing the clamping jaws together, characterized in that the length of the clamping jaws (3.1, 3.2) is greater than the stack height of a stack (1) which is to be manipulated, in that the clamping surfaces (31) of the clamping jaws are of elastically deformable design, and in that the apparatus has guiding means for guiding the movement of the clamping jaws in the clamping direction (C).

5. Apparatus according to Claim 4, characterized in that strips (32) which are made of an elastically deformable material and are continuous over the height of the stack which is to be manipulated are provided on the clamping surfaces (31) of the clamping jaws (3.1, 3.2).

6. Apparatus according to Claim 5, characterized in that the strips (32) consist of closed-cell polyurethane foam.

7. Apparatus according to Claim 5, characterized in that the strips each comprise a tube which can be filled with air.

8. Apparatus according to one of Claims 4 to 7, characterized in that the clamping jaws (3.1, 3.2) are connected to one another by a piston/cylinder arrangement (61.1/61.2) and are guided on a spindle (60) such that they can be moved with respect to one another between two end stops.

9. Apparatus according to Claim 8, characterized in that provided on the spindle (60) is a reference stop (63) against which the clamping jaws (3.1 and 3.2), which are connected to one another by the piston/cylinder arrangement (61.1/61.2), are pressed by the force of a spring (62).

10. Apparatus according to one of Claims 4 to 9, characterized in that the first stabilizing means (2) have an open container (23) which is secured on an underlying surface (21), the stacked articles projecting from the container.

11. Apparatus according to one of Claims 4 to 10, characterized in that the second stabilizing means (5) have an obliquely arranged channel (51), which is open towards the top, and at least one end plate (52), which can be displaced in said channel.

12. Apparatus according to one of Claims 4 to 11, characterized in that the clamping jaws (3.1 and 3.2) are arranged such that they can be pivoted together about a pivot pin (43).

## Revendications

1. Procédé de manutention d'une pluralité d'objets plats empilés en une pile (1) d'une hauteur dépassant largement la hauteur maximale d'un empilage libre de ces mêmes objets, ladite pile (1) étant réceptionnée par des premiers moyens de stabilisation (2) et remise à des deuxièmes moyens de stabilisation (5), caractérisé en ce que les premiers moyens de stabilisation (2) sont conformés de telle sorte qu'au moins deux régions partielles de deux faces marginales (12.2, 12.3), mutuellement opposées, de la pile (1) et s'étendant sur toute la hauteur de cette pile, sont librement accessibles, que la pile est saisie entre deux mâchoires de serrage (3.1, 3.2) guidées dans une direction de serrage (C), réciproquement mobiles et ayant des faces de serrage (31) élastiquement déformables, lesdites mâchoires (3.1, 3.2) étant positionnées, dans les régions partielles des faces marginales et au-dessus des faces frontales (11) de la pile de manière à déborder de ces faces, et ensuite serrées l'une contre l'autre, et que la pile (1) est transportée entre lesdites mâchoires (3.1, 3.2) vers les deuxièmes moyens de stabilisation (5) où elle sera déposée.

2. Procédé selon la revendication 1, caractérisé en ce que les objets empilés en une pile (1) sont des cartes, des sachets à haute brillance contenant un échantillon liquide ou solide, des sachets à échantillons en papier à haute brillance et à contenu liquide ou solide, des sachets à échantillons en papier ou en film plastique à contenu quelconque, ou bien des échantillons de marchandise, et en ce que les premiers moyens de stabilisation (2) présentent un récipient ouvert (23) dont les objets dépassent.

3. Procédé selon la revendication 2, caractérisé en ce que les mâchoires de serrage (3.1, 3.2) génèrent une pression de serrage comprise entre 1 et 3.10⁴Pa (0,1 à 0,3 kg/cm²).

4. Dispositif pour la mise en oeuvre du procédé conforme à l'une des revendications 1 à 3, lequel dispositif présente deux mâchoires de serrage (3.1, 3.2) et des moyens pour serrer lesdites mâchoires l'une contre l'autre, caractérisé en ce que la longueur des mâchoires (3.1, 3.2) est supérieure à la hauteur d'une pile (1) à manipuler, en ce que les faces de serrage (31) des mâchoires sont élastiquement déformables et que le dispositif présente des moyens pour le guidage du mouvement des mâchoires dans la direction de serrage (C).

5. Dispositif selon la revendication 4, caractérisé en ce que sur les faces de serrage (31) des mâchoires (3.1, 3.2) sont fixées des bandes (32) en un matériau élastiquement déformable qui s'étendent sur la hauteur d'une pile à manipuler.

6. Dispositif selon la revendication 5, caractérisé en ce que les bandes (32) sont constituées en une mousse de polyuréthane à pores fermés.

7. Dispositif selon la revendication 5, caractérisé en ce que chacune des bandes est constituée d'un tuyau gonflable à l'air.

8. Dispositif selon l'une des revendication 4 à 7, caractérisé en que les mâchoires de serrage (3.1, 3.2) sont assemblées mutuellement par un dispositif à piston/cylindre (61.1/61.2) et sont mobiles sur un axe (60) dans des directions antagonistes entre deux butées finales.

9. Dispositif selon la revendication 8, caractérisé en ce sur l'axe (60) est prévue une butée de référence (63) contre laquelle les mâchoires de serrage (3.1 et 3.2), mutuellement assemblées par le dispositif à piston/cylindre (61.1/61.2), sont serrées sous l'effet de la force d'un ressort (62).

10. Dispositif selon l'une des revendications 4 à 9, caractérisé en ce que les premiers moyens de stabilisation (2) présentent un récipient ouvert (23), fixé sur un support (21), tandis que les objets empilés débordent de ce récipient.

11. Dispositif selon l'une des revendications 4 à 10, caractérisé en ce que les deuxièmes moyens de stabilisation (5) présentent un canal (51) ouvert en direction du haut, disposé obliquement, ainsi qu'au moins une plaque frontale (52) coulissable à l'intérieur de ce canal.

12. Dispositif selon l'une des revendications 4 à 11, caractérisé en ce que les mâchoires de serrage (3.1 et 3.2) sont disposées de manière pivotable mutuellement autour d'un axe de pivotement (43).
